# EUROPEAN PATENT APPLICATION

(11) **EP 2 993 599 A1**
(43) Date of publication of application: **09.03.2016**
(21) Application number: 15159749.9
(22) Date of filing: 18.03.2015
(51) Int. Cl.: G06F 17/50

(54) **METHOD FOR GENERATING DESIGN SCHEME OF KITCHEN**

(30) Priority: 05.09.2014 CN 201410454152
(71) Applicant: Beijing Eryiju Technology Co., Ltd, Dongdan Beijing (CN)
(72) Inventor: Yao, Jin, Dongdan (CN); Liu, Rujia, Dongdan (CN); He, Decai, Dongdan (CN); Bai, Kun, Dongdan (CN); Li, Hao, Dongdan (CN); Wang, Bo, Dongdan (CN); Zhang, Xingnan, Dongdan (CN); Fang, Xin, Dongdan (CN)
(74) Representative: Berkkam, Ayfer

(57) **Abstract**

The present invention discloses a method for generating a design scheme of a kitchen, characterized in that, the method includes: step 1) inputting combination data, 3D model data and the like of each series, type, size, material, modeling door and accessories and various cabinet body of each brand into a database of the brand in QEYJ software according to a QEYJ rule; step 2) transforming all kinds of cabinet designs and usage requirements of placement into computer description language and formulas of functions; step 3) determining s region to place cabinets, after a starting point, turning points, a finishing point and positions of a range hood and a sink are determined in a kitchen of a customer; for an island table and a bar table, determining a position by determining a starting point and a finishing point of placement; then, through the present invention, immediately calculating optimal design of placement for each series in a QEYJ system, and presenting it in a 2D interface. Since a data amount to be stored is relatively small in this method, the data may be easily transmitted to every computer mounted with QEYJ cabinet software over the world. Every upgraded cabinet series and every upgraded design fashion may be easily transmitted over the world.

## Description

### TECHNICAL FIELD

The present invention generally relates to a method for generating a design scheme of a kitchen.

### BACKGROUND

In software of the modern cabinet design, most designers need to manually place cabinets one by one in the software according to requirements of the owners and based on individual long-term work experience. This takes too much time, and moreover, the cabinet combination scheme is not necessarily optimal. In addition, it is difficult to provide a quick presentation of the effect of the cabinets to the owner in a short time, and switch between different series is very complicated.

### SUMMARY

The present invention provides a method for generating a design scheme of a kitchen. In the present invention, by determining positions of a first mark and a second mark in a 2D plane, a fast generation of a design scheme of a kitchen in a new layout of a house is realized, solving the problem that adjustment is time-consuming and labor-consuming. Meanwhile, a scene of a decoration scheme may be presented immediately in a 3D scene, and a desired three dimensional effect by a cabinet designer may be accurately and timely achieved, solving the problem that there is an error between designing and practical decorating.

The technical solutions provided by the present invention are as follows.

A method for generating a design scheme of a kitchen, characterized in that, the method includes:

step 1) inputting combination data, 3D model data and the like of each series, type, size, material, modeling door and accessories and various cabinet body of each brand into a database of the brand in QEYJ software according to a QEYJ rule;

step 2) transforming all kinds of cabinet designs and usage requirements of placement into computer description language and formulas of functions;

step 3) determining a region to place cabinets, after a starting point, turning points, a finishing point and positions of a range hood and a sink are determined in a kitchen of a customer; for an island table and a bar table, determining a position by determining a starting point and a finishing point of placement; then, through the present invention, immediately calculating optimal design of placement for each series in a QEYJ system, and presenting it in a 2D interface.

step 4) once a name of a different series is selected, immediately calling placement of an optimal combination of the series which have been already calculated and immediately transforming it into a three-dimensional stereo; allowing the customer to easily compare different stereo presentations of various series of cabinets in his house; and

step 5) since a data amount to be stored is relatively small in this method, the data may be easily transmitted to every computer mounted with QEYJ cabinet software over the world; every upgraded cabinet series and every upgraded design fashion may be easily transmitted over the world.

Preferably, in the method for generating a design scheme of a kitchen, contents which are input into the database include: types of cabinets, sizes of cabinets, materials of cabinets, modeling doors of cabinets and accessories of accessories.

Preferably, in the method for generating a design scheme of a kitchen, the types of the cabinets include: floor cabinets, hanging cabinets, medium-height cabinets, medium-to-full-height cabinets and full-height cabinets, etc. The sizes of the cabinets include: 100, 300, 400, 450, 500, 600, 800, 900, 1000, etc. The materials of the cabinets include: solid wood doors, plastic film doors, lacquering doors, Egger doors, decorated facet doors, stainless steel doors, molded doors, fireproof doors, etc. The modeling doors of the cabinets include: flat, curved door, slotted door, glass door, built-in type, etc. The accessories of the cabinets include: hinges, drawer slides, supports, handles, drawers, skirting boards, Roman marble pillars, veneered side boards, top lines, eyebrow lines, basins, faucets, range hoods, spot lights, etc.

Preferably, in the method for generating a design scheme of a kitchen, transforming all kinds of cabinet designs and usage requirements of placement into computer description language and formulas of functions means: inputting specifications for cabinets design, design contents and rules of each type of each brand into the database, and then transforming them into computer description language and formulas of functions.

Preferably, in the method for generating a design scheme of a kitchen, the method of placing the starting point, the turning points and the finishing points of the cabinets and the positions of the range hood and the sink is: clicking any point on the wall along a wall line of the cabinets, marking the positions of the starting point, the turning points and the finishing point sequentially, and clicking the positions of the range hood and the sink along the wall line of the cabinets within the range of the marked starting point, turning points and finishing point.

Preferably, in the method for generating a design scheme of a kitchen, after the starting point, the turning points and the finishing point of the cabinets and the positions of the range hood and the sink are placed, a region for cabinets according to these points is determined, and then calculated in the database, by a computer. Since generally, the entire region needs to be placed full of cabinets in the region for cabinets under a condition to satisfy living requirements, and a data amount of cabinets is huge, the computer may calculate placement of cabinet design most suitable for the living requirements of a customer for each series. If it is to be performed manually, it will take much more time and the cabinet combination is not necessarily optimal.

Preferably, in the method for generating a design scheme of a kitchen, a name and a picture of a prototype room of each series is selected, since each series of cabinets (such as solid wood, built-in type) has a different size, a different shape and a different usage, they are combined (for example, for a hanging cabinet, a hanging cabinet with double vertically hinged doors, a hanging cabinet with a single horizontally hinged door and a hanging cabinet with double horizontally hinged doors are combined, and for a floor cabinet, a floor cabinet with double horizontally hinged doors, a floor cabinet with two drawers, and a floor cabinet with three drawers and combined, and the like); by utilizing the calculating capacity of a computer, placement of an optimal combination of each of the different series may be calculated once at a time, and stored into the background; afterwards, they are displayed in forms of pictures of prototype rooms for a user to select.

The advantageous effects of the present invention are as follows.

Since in the present invention, information on the names and the sizes, numbers of combined plates and accessories contained of the cabinets is recorded, when calling and presenting in stereo the calculated placement of design by the computer, it is actually re-expanding, combining plates according to the above rules, re-generating a 3D model and immediately presenting a three-dimensional effect according to a QEYJ rule, therefore, the data amount is small.

Through the present invention, in a new scene of various house of customers that has been change, the formulas of functions of the previous design may be transformed by the computers in the new scene into a three dimensional stereo suitable for the new scene.

In the present invention, since the data amount to be stored is relatively small, the data may be easily transmitted over the world, and various cabinet series and design fashions may be quickly upgraded.

### BRIEF DESCRIPTION OF THE DRAWINGS

Figure 1 shows that in the present invention, through a start point, turning points, a finishing point of cabinets to be placed and positions of a range hood and a sink, a region to place the cabinets is determined according to actual layout of a house, and the cabinets are presented in a flat 2D interface;
Figure 2 shows that in the present invention, once a name of a lacquering for cars series is selected, placement of an optimal combination of the series which have been already calculated is immediately called and immediately transformed into a three-dimensional stereo;
Figure 3 shows that in the present invention, once a name of an Egger board series is selected, placement of an optimal combination of the series which have been already calculated is immediately called and immediately transformed into a three-dimensional stereo; and
Figure 4 is a schematic view showing pavement of ground files in the kitchen according to the present invention; and
Figure 5 is a schematic view showing pavement of wall files in the kitchen according to the present invention.

### DETAILED DESCRIPTION

Hereinafter, the present invention is further described in detail in conjunction with accompany drawings, to enable those skilled in the art to practice the invention with reference to the contents of the description.

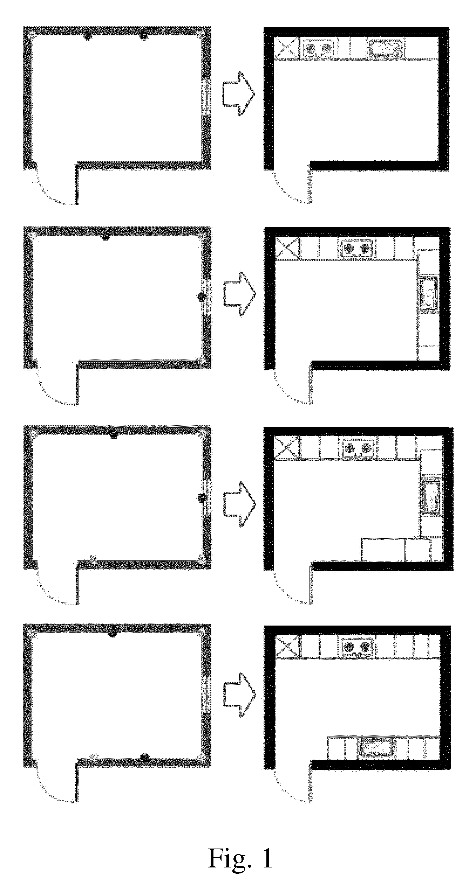

As shown in Figure 1, after a cabinet line is determined in the kitchen along an extension direction of a layout of a house, a region to place cabinets is determined, and a starting point, turning points and a finishing point of the cabinets to be placed and positions of a stove and a sink are determined, as shown in Figure 1, the starting point, the turning points and the finishing point of the cabinets are represented with grey dots, and as shown in Figure 1, the positions of the stove and the sink are represented with black dots. A stove cabinet is disposed at the position of the stove, and a sink cabinet is disposed at the position of the sink. Ordinary cabinets are disposed at other positions. If an island table and a bar table is to be placed, it is only needed to determine a starting point and a finishing point of the placement, and to select a suitable size. The steps of the laying out the cabinets are as follows.

Firstly, laying out " - " shaped cabinets. As shown in Figure 1, a starting point and a finishing point of the cabinets are placed with grey dots in the kitchen along the extension direction of the layout of the house, and then a stove point and a sink point are placed with black dots in a wall line between the starting point and the finishing point. According to the starting point, the finishing point, the positions of the stove point and the sink point which are previously clicked, the system may automatically and properly place the stove cabinet, the sink cabinet and other cabinets into the 2D layout of the house once at a time based on specifications for cabinets design, to realize a flat presentation of the " - " shaped cabinets.

Secondly, laying out "L" shaped cabinets. As shown in Figure 1, a starting point, a turning point and a finishing point of the cabinets are placed with grey dots in the kitchen along the extension direction of the layout of the house, and then a stove point and a sink point are placed with black dots in a wall line between the starting point, the turning point and the finishing point. According to the starting point, the turning point, the finishing point, the positions of the stove point and the sink point which are previously clicked, the system may automatically and properly place the stove cabinet, the sink cabinet and other cabinets into the 2D layout of the house once at a time based on specifications for cabinets design, to realize a flat presentation of the "L" shaped cabinets.

Thirdly, laying out "U" shaped cabinets. As shown in Figure 1, a starting point, a turning point, a second turning point and a finishing point of the cabinets are placed with grey dots in the kitchen along the extension direction of the layout of the house, and then a stove point and a sink point are placed with black dots in a wall line between the starting point, the turning point, the second turning point and the finishing point. According to the starting point, the turning point, the second turning point, the finishing point, the positions of the stove point and the sink point which are previously clicked, the system may automatically and properly place the stove cabinet, the sink cabinet and other cabinets into the 2D layout of the house once at a time based on specifications for cabinets design, to realize a flat presentation of the "U" shaped cabinets.

Fourthly, laying out "=" shaped cabinets. As shown in Figure 1, a starting point and a finishing point of the cabinets are placed with grey dots in the kitchen along one side of the extension direction of the layout of the house, and then a starting point and a finishing point of the cabinets are placed with grey dots in the kitchen along another side of the extension direction of the layout of the house. Then a stove point and a sink point are placed with black dots in two segments of wall lines between the starting points and the finishing points. the According to the two starting points, the two finishing points, the positions of the stove point and the sink point which are previously clicked, the system may automatically and properly place the stove cabinet, the sink cabinet and other cabinets into the 2D layout of the house once at a time based on specifications for cabinets design, to realize a flat presentation of the "=" shaped cabinets.

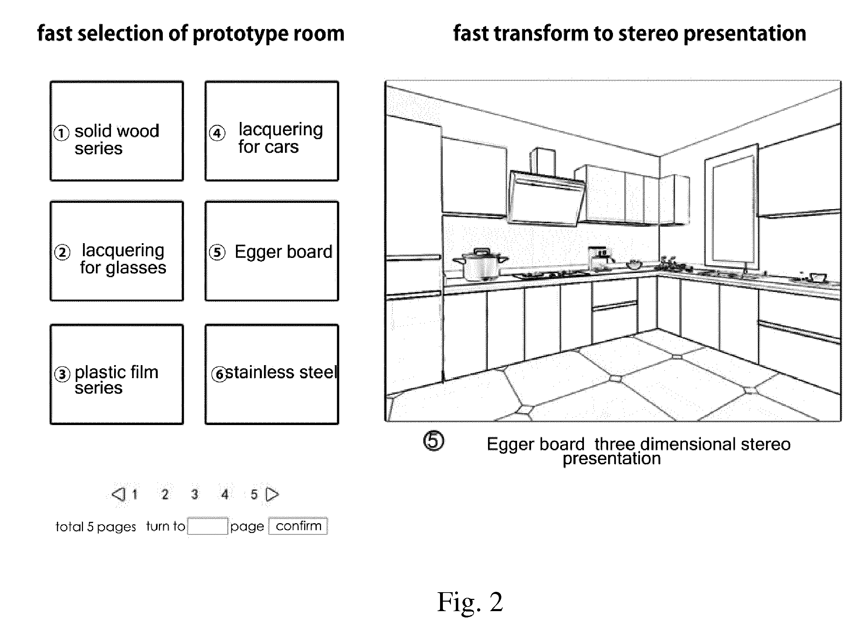

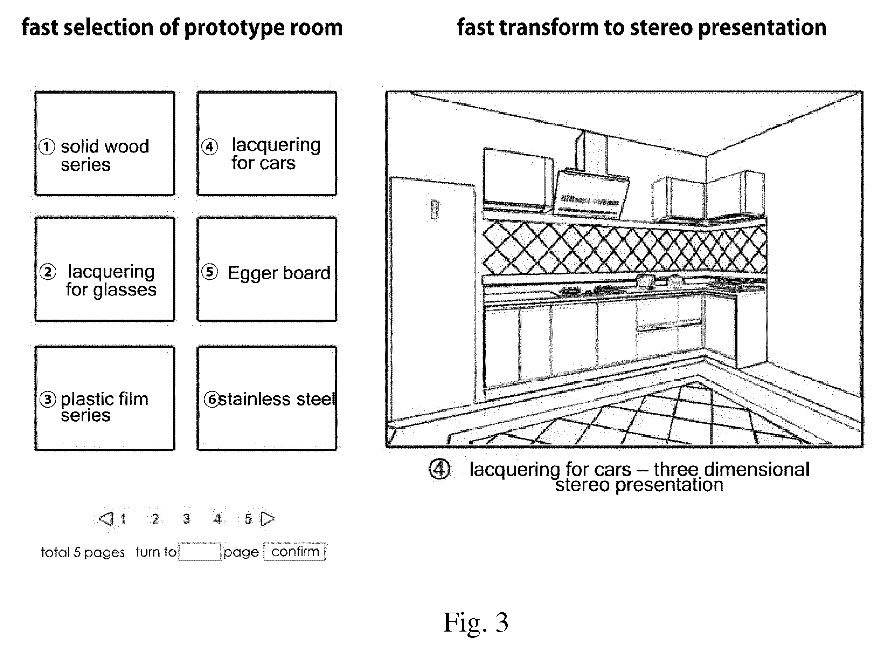

As shown in Figures 2 and 3, since each series of cabinets (such as solid wood, built-in type) has a different size, a different shape and a different usage, they may be combined (for example, for a hanging cabinet, a hanging cabinet with double vertically hinged doors, a hanging cabinet with a single horizontally hinged door and a hanging cabinet with double horizontally hinged doors are combined, and for a floor cabinet, a floor cabinet with double horizontally hinged doors, a floor cabinet with two drawers, and a floor cabinet with three drawers and combined, and the like). By utilizing the calculating capacity of a computer, placement of an optimal combination of each of the different series may be calculated once at a time, and stored into the background. Once a name of a different series is selected, the placement of the optimal combination of the series calculated at the background is called immediately and transformed into a three-dimensional stereo, allowing the customer to easily compare different stereo presentations of various series of cabinets in his house.

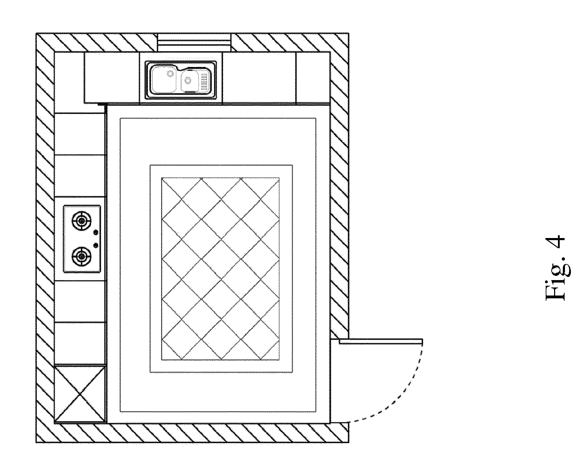

As shown in Figure 4, after a customer places a cabinet in the kitchen, and paves ground tiles such as a boundary line, the computer will automatically pave around the cabinets according to the sizes of the cabinets. For another example, for an equal divisional paving of modeling bricks in a center region of the boundary line, the computer will equalizing to achieve a desired effect for the owner based on his requirements.

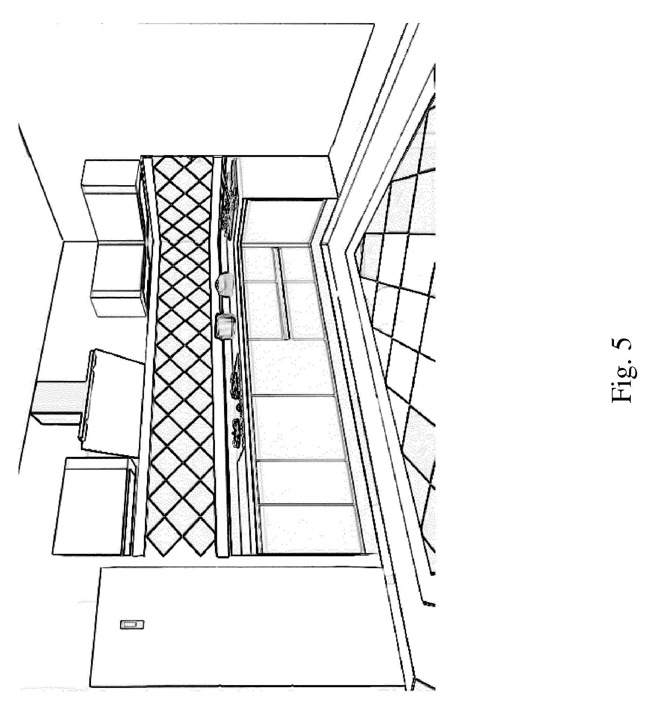

As shown in Figure 5, when the customer pave wall tiles in the kitchen, such as paving a cross brand line, patterned bricks, the computer will pave only in the region where the cabinets are occupied, according to the sizes of the cabinets.

Although the embodiments of the present invention have been disclosed as above, they are not limited merely to those set forth in the description and the embodiments, and they may be applied to various fields suitable for the present invention. For those skilled in the art, other modifications may be easily modified realized without departing from the general concept defined by the claims and their equivalents, and the present invention does not limit to the particular details and drawings illustrated and described herein.

## Claims

1. A method for generating a design scheme of a kitchen, **characterized in that**, the method comprises:
step 1) inputting combination data, 3D model data and the like of each series, type, size, material, modeling door and accessories and various cabinet body of each brand into a database of the brand in QEYJ software according to a QEYJ rule;
step 2) transforming all kinds of cabinet designs and usage requirements of placement into computer description language and formulas of functions;
step 3) determining a region to place cabinets, after a starting point, turning points, a finishing point and positions of a range hood and a sink are determined in a kitchen of a customer; for an island table and a bar table, determining a position by determining a starting point and a finishing point of placement; then, through the present invention, immediately calculating optimal design of placement for each series in a QEYJ system, and presenting it in a 2D interface.
step 4) once a name of a different series is selected, immediately calling placement of an optimal combination of the series which have been already calculated and immediately transforming it into a three-dimensional stereo; allowing the customer to easily compare different stereo presentations of various series of cabinets in his house; and
step 5) since a data amount to be stored is relatively small in this method, the data may be easily transmitted to every computer mounted with QEYJ cabinet software over the world; every upgraded cabinet series and every upgraded design fashion may be easily transmitted over the world.

2. The method for generating a design scheme of a kitchen of claim 1, wherein:
contents which are input into the database comprise: types of cabinets, sizes of cabinets, materials of cabinets, modeling doors of cabinets and accessories of accessories.

3. The method for generating a design scheme of a kitchen of claim 2, wherein:
the types of the cabinets comprise: floor cabinets, hanging cabinets, medium-height cabinets, medium-to-full-height cabinets and full-height cabinets, etc.; the sizes of the cabinets comprise: 100, 300, 400, 450, 500, 600, 800, 900, 1000, etc.; the materials of the cabinets comprise: solid wood doors, plastic film doors, lacquering doors, Egger doors, decorated facet doors, stainless steel doors, molded doors, fireproof doors, etc.;
the modeling doors of the cabinets comprise: flat, curved door, slotted door, glass door, built-in type, etc.; and the accessories of the cabinets comprise: hinges, drawer slides, supports, handles, drawers, skirting boards, Roman marble pillars, veneered side boards, top lines, eyebrow lines, basins, faucets, range hoods, spot lights, etc.

4. The method for generating a design scheme of a kitchen of claim 1, wherein:
transforming all kinds of cabinet designs and usage requirements of placement into computer description language and formulas of functions means: inputting specifications for cabinets design, design contents and rules of each type of each brand into the database, and then transforming them into computer description language and formulas of functions.

5. The method for generating a design scheme of a kitchen of claim 1, wherein:
the method of placing the starting point, the turning points and the finishing points of the cabinets and the positions of the range hood and the sink is: clicking any point on the wall along a wall line of the cabinets, marking the positions of the starting point, the turning points and the finishing point sequentially, and clicking the positions of the range hood and the sink along the wall line of the cabinets within the range of the marked starting point, turning points and finishing point.

6. The method for generating a design scheme of a kitchen of claim 1, wherein:
after the starting point, the turning points and the finishing point of the cabinets and the positions of the range hood and the sink are placed, a region for cabinets according to these points is determined, and then calculated in the database, by a computer; since generally, the entire region needs to be placed full of cabinets in the region for cabinets under a condition to satisfy living requirements, and a data amount of cabinets is huge, the computer may calculate placement of cabinet design most suitable for the living requirements of a customer for each series; if it is to be performed manually, it will take much more time and the cabinet combination is not necessarily optimal.

7. The method for generating a design scheme of a kitchen of claim 1, wherein: a name and a picture of a prototype room of each series is selected, since each series of cabinets (such as solid wood, built-in type) has a different size, a different shape and a different usage, they are combined (for example, for a hanging cabinet, a hanging cabinet with double vertically hinged doors, a hanging cabinet with a single horizontally hinged door and a hanging cabinet with double horizontally hinged doors are combined, and for a floor cabinet, a floor cabinet with double horizontally hinged doors, a floor cabinet with two drawers, and a floor cabinet with three drawers and combined, and the like); by utilizing the calculating capacity of a computer, placement of an optimal combination of each of the different series may be calculated once at a time, and stored into the background; afterwards, they are displayed in forms of pictures of prototype rooms for a user to select.

8. The method for generating a design scheme of a kitchen of claim 1, wherein:
since a data amount to be stored is relatively small in this method means: since only information on the names and the sizes, numbers of combined plates and accessories contained of the cabinets with a huge data amount is recorded in the QEYJ software; when calling and presenting in stereo the calculated placement of design by the computer, it is actually re-expanding, combining plates according to the above rules, re-generating a 3D model and immediately presenting a three-dimensional effect according to a QEYJ rule, therefore, the data amount is small.
